# EUROPÄISCHE PATENTSCHRIFT

(11) **EP 2 856 536 B1**
(45) Veröffentlichungstag und Bekanntmachung des Hinweises auf die Patenterteilung: **12.07.2017**
(21) Anmeldenummer: 13723512.3
(22) Anmeldetag: 17.05.2013
(51) Int. Cl.: H01M 2/20, H01G 2/00, H01M 2/22, H01R 11/28, H01G 4/38, H01G 9/26, H01G 11/08, H01G 11/76, H01M 2/10

(54) **SPEICHEREINHEIT ZUM SPEICHERN ELEKTRISCHER ENERGIE**
STORAGE UNIT FOR STORING ELECTRIC ENERGY
ENSEMBLE ACCUMULATEUR D'ÉNERGIE ÉLECTRIQUE

(30) Priorität: 01.06.2012 DE 102012209321
(43) Veröffentlichungstag der Anmeldung: 08.04.2015
(73) Patentinhaber: Robert Bosch GmbH, 70442 Stuttgart (DE)
(72) Erfinder: HUEHNER, Stefan, 72127 Kusterdingen (DE); DILLMANN, Adolf, 72525 Muensingen (DE); HOLP, Reiner, 72474 Winterlingen (DE)
(86) Internationale Anmeldenummer: PCT/EP2013/060310
(87) Internationale Veröffentlichungsnummer: WO 2013/178497

(56) Entgegenhaltungen:
- EP-A1- 2 343 755
- WO-A2-2012/139839
- US-A1- 2010 008 018
- US-A1- 2010 015 519

## Beschreibung

### Stand der Technik

Die Erfindung betrifft eine Speichereinheit zum Speichern elektrischer Energie. Die Speichereinheit weist wenigstens einen Energiespeicher, insbesondere einen Kondensator oder einen Akkumulator auf, wobei der Energiespeicher wenigstens einen positiven elektrischen Anschluss und wenigstens einen negativen elektrischen Anschluss aufweist. Der Energiespeicher ist ausgebildet, über den positiven elektrischen Anschluss und den negativen elektrischen Anschluss mit elektrischer Energie aufgeladen zu werden und die elektrische Energie über die Anschlüsse wieder abzugeben. Die Speichereinheit weist eine mit dem positiven elektrischen Anschluss verbundene elektrisch leitfähige Kontaktschiene und eine mit dem negativen elektrischen Anschluss verbundene elektrisch leitfähige Kontaktschiene auf.

Die Schrift US 2010/008018 A1 offenbart einen Energiespeicher, dessen elektrisch leifähige Schichten über fingerförmige Kontaktelemente einer als Blech ausgebildeten Kontaktschiene kontaktiert werden, wobei die Kontaktelemente in einer Aussparung der Kontaktschiene ausgebildet sind.

Die Schrift US 2010/015519 A1 beschreibt ein klammerförmiges Kontaktelement, welches an einen Anschluss eines Energiespeichers aufgeklemmt werden kann und zur weiteren Verbindung des Klemmkontaktes insbesondere ein Laserschweißen vorschlägt.

Aus der Schrift EP 2 343 755 A1 ist ein klammerförmiges Kontaktelement bekannt, welches ausgebildet ist, einen Anschlusszapfen einer Batterie zu umgreifen und dort festgeklemmt zu werden.

### Offenbarung der Erfindung

Erfindungsgemäß weisen die Kontaktschienen der Speichereinheit der eingangs genannten Art jeweils wenigstens ein an die Kontaktschienen federnd angeformtes Kontaktelement auf, wobei das Kontaktelement wenigstens zwei Flügel aufweist. Die Flügel erstrecken sich mit wenigstens einer Richtungskomponente in zueinander entgegengesetzte Richtungen. Die Flügel sind jeweils mittels einer Schweißverbindung, nämlich einer Punktschweißverbindung mit dem elektrischen Anschluss verbunden.

Durch die zwei Flügel des Kontaktelements ist das Kontaktelement mittels einer Punktschweißverbindung mit dem Anschluss, nämlich der elektrisch leitfähigen Schicht verbunden, welche beim Schweißen eine Erwärmung auf die Flügelbereiche des Kontaktelements begrenzt. Beim Schweißen mittels der Punktschweißtechnik kann so ein Schweißstrom von einer auf einen ersten Flügel aufgesetzten Schweißelektrode zu einer auf den zweiten Flügel aufgesetzten Schweißelektrode fließen. Der Schweißstrom teilt sich dabei in zwei Anteile auf, nämlich in einen Schweißstrom, der über den Flügel und das Kontaktelement bis hin zum zweiten Flügel und dort bis zur zweiten Elektrode fließt, und einen Schweißstrom, welcher von der Elektrode durch den ersten Flügel hindurch, weiter bis hinein in die elektrisch leitfähige Schicht, die den Anschluss bildet und durch den Anschluss weiter bis hin zu einer Berührungsstelle des zweiten Flügels mit der elektrisch leitfähigen Schicht und von dort durch den zweiten Flügel hindurch bis zur zweiten Schweißelektrode fließt.

Das Kontaktelement ist bevorzugt aus der Kontaktschiene mittels Stanzen oder Laserschneiden ausgeformt. Die Kontaktschiene ist bevorzugt durch ein Blech, insbesondere ein Kupferblech gebildet.

Die Anschlüsse des Energiespeichers, nämlich der positive und der negative Anschluss, sind jeweils durch eine elektrisch leitfähige Schicht, insbesondere eine Schoop-Schicht gebildet.

Bevorzugt weisen die Kontaktschienen jeweils wenigstens einen äußeren Anschluss zum elektrischen Verbinden der Speichereinheit auf. Der elektrische Anschluss ist beispielsweise durch eine Steckverbindung, eine Schneid-KlemmVerbindung oder eine Schraubverbindung gebildet.

Bevorzugt erstrecken sich die Flügel des Kontaktelements koplanar in der Ebene der Kontaktschiene, oder parallel zu der Ebene der Kontaktschiene. Dadurch kann das Kontaktelement vorteilhaft zusammen mit der Kontaktschiene einstückig ausgebildet sein. Weiter vorteilhaft kann das Kontaktelement zusammen mit der Kontaktschiene in einem Arbeitsschritt, insbesondere in einem Stanz- oder Umformschritt - erzeugt werden. Erfindungsgemäß ist das Kontaktelement in einer Aussparung der Kontaktschiene angeordnet. Weiter bevorzugt ist die Aussparung durch Stanzen oder Laserschneiden erzeugt. So kann das Kontaktelement vorteilhaft mittels eines Schneid- oder Stanzprozesses in der Kontaktschiene erzeugt werden. Das Kontaktelement ist dann - beispielsweise über einen nach dem Stanzen verbleibenden Steg oder ein Federelement - mit der Kontaktschiene verbunden. Erfindungsgemäß weist das Kontaktelement einen Steg auf, wobei die Flügel jeweils mit dem Steg verbunden sind, und wobei der Steg mit der Kontaktschiene verbunden ist. Die Flügel können so vorteilhaft über den Steg von der Kontaktschiene ausgehend die in dem Energiespeicher gespeicherten elektrischen Ladungen von dem Anschluss aufnehmen und an die Kontaktschiene weiterleiten, oder von der Kontaktschiene elektrische Ladungen weiterleiten und den Energiespeicher aufladen.

In einer bevorzugten Ausführungsform weisen die Flügel im Bereich eines Endes einen Landebereich für eine Schweißelektrode, und einen mit dem Landebereich verbundenen, sich längs erstreckenden Verbindungsabschnitt auf, wobei der Verbindungsabschnitt den Landebereich mit dem Steg verbindet. Der Verbindungsabschnitt weist bevorzugt eine kleinere Querschnittsfläche quer zur Längserstreckung auf, als der Landebereich. So kann vorteilhaft mittels des Verbindungsabschnitts ein Leitungsabschnitt zur elektrischen Stromleitung gebildet sein, welcher einen vorbestimmten elektrischen Widerstandswert aufweist. Der Landebereich kann vorteilhaft hinsichtlich seiner Flächengröße und Flächengeometrie derart ausgebildet sein, dass die Schweißelektrode auf dem Landebereich sicher landen kann. Dazu kann der Landebereich beispielsweise rund, insbesondere kreisrund ausgebildet sein.

Die Verbindungsabschnitte der Flügel weisen bevorzugt gemeinsam einen geringeren elektrischen Widerstand auf, als der Anschluss, insbesondere die elektrisch leitfähige Schicht zwischen den Landebereichen. So wird vorteilhaft die Berührungsstelle zwischen dem Flügel und dem Anschluss beim Schweißen stärker erwärmt, als das Kontaktelement. Das Kontaktelement kann so vorteilhaft eine vorbestimmte Federsteife oder Elastizitätsmodul beibehalten, ohne durch die Erwärmung beim Schweißen zu erweichen.

In einer bevorzugten Ausführungsform sind zueinander benachbarte Flügel des Kontaktelements zueinander V-förmig angeordnet. Durch die V-förmige Anordnung ist vorteilhaft eine Verbindungssteifigkeit hinsichtlich Verbiegungen des Kontaktelements beim Bewegen des elektrischen Anschlusses aufgrund von Temperaturausdehnungen in zueinander verschiedenen Richtungen erzeugt.

Bevorzugt beträgt ein zwischen den Flügeln, insbesondere den Verbindungsabschnitten der Flügel, eingeschlossener Winkel weniger als 180 Grad. Erfindungsgemäß weisen die Flügel in zueinander entgegengesetzte Richtungen. Der Winkel zwischen den Flügeln, insbesondere den Verbindungsabschnitten der Flügel beträgt in einer Ausführungsform 180 Grad. Bei dieser Ausführungsform kann das Kontaktelement, nämlich die Schweißpunkte des Kontaktelements bei einer Temperaturausdehnung des Energiespeichers mit überwiegendem Längsrichtungsanteil entlang der Längsrichtung der Verbindungsabschnitte die Schweißpunkte nur wenig oder gar nicht auf Torsion belasten. Die Torsionsachse verläuft dann senkrecht zur elektrisch leitfähigen Schicht und senkrecht zu einer Ebene des Flügels.

Die Flügel bilden bevorzugt zusammen mit einem Steg in der zuvor beschriebenen Ausführungsform eine T-Form. Durch die T-Form kann vorteilhaft eine raumsparende Verbindungsgeometrie von den Schweisspunkten zum Bereich der Kontaktschiene hin gebildet sein, der das Kontaktelement umschließt.

Bevorzugt ist der Steg über wenigstens eine Feder, insbesondere einen Mäander mit der Kontaktschiene verbunden. Durch den Mäander ist vorteilhaft eine Feder gebildet, welche bei Temperaturausdehnungen zwischen dem Anschluss und der Kontaktschiene die Schweißverbindung zwischen dem Kontaktelement und dem Anschluss entlasten kann.

Der Steg ist bevorzugt über den wenigstens einen Mäander an die Kontaktschiene angeformt. Das Kontaktelement ist in dieser Ausführungsform beispielsweise zusammen mit dem Steg und dem Mäander aus einem die Kontaktschiene bildenden Blech ausgestanzt oder lasergeschnitten.

In einer bevorzugten Ausführungsform ist der Steg über zwei Federn, insbesondere Mäander mit der Kontaktschiene verbunden. Bevorzugt verbinden die Federn jeweils den Steg mit der Kontaktschiene. Dadurch können die Federn jeweils einen elektrischen Verbindungsabschnitt von der Kontaktschiene zu dem Steg hin bilden. Der Steg ist so über die Mäander mit der Kontaktschiene federnd verbunden.

In einer bevorzugten Ausführungsform erstrecken sich die Mäander jeweils mit einer konvexen Seite in eine gemeinsame Richtung. Die Mäander bilden weiter bevorzugt gemeinsam mit dem Steg eine W-Form oder die Form eines doppelten U. Die Form des doppelten U beziehungsweise des W bewirkt vorteilhaft, dass durch diese Anordnung der Steg mit der Kontaktschiene über ein gefedertes Schwenkgelenk - gebildet durch die Mäander - verbunden ist. So kann eine thermische Ausdehnung des Energiespeichers quer zu dem Steg, bevorzugt in Längsrichtung der Kontaktschiene, über die Schweißverbindungen mit einem Hebel auf das Schwenkgelenk wirken, wobei der Hebelarm durch den Steg gebildet ist.

Bevorzugt erstreckt sich die Kontaktschiene von dem Anschluss beabstandet. Das Kontaktelement ist bevorzugt ausgebildet, sich von dem Anschluss federnd abzustützen, wobei der Steg zu dem Anschluss hin abgewinkelt ist. Dazu weist der Steg bevorzugt eine Feder auf. Bevorzugt ist die Feder des Steges durch einen abgewinkelten Federabschnitt des Steges gebildet.

Die Erfindung wird nun im Folgenden anhand von Figuren und weiteren Ausführungsbeispielen beschrieben. Weitere vorteilhafte Ausführungsformen ergeben sich aus den Merkmalen der abhängigen Ansprüche und den in den Figuren beschreiebenen Merkmalen.
Figur 1 zeigt ein Ausführungsbeispiel für eine Speichereinheit mit Wickelkondensatoren als Energiespeicher, die über mehrere jeweils mittels zwei Schweisspunkten mit dem Energiespeicher verbundene Kontaktelemente elektrisch kontaktiert sind;
Figur 2 zeigt ein Ausführungsbeispiel für ein T- förmiges Kontaktelement;
Figur 3 zeigt ein Ausführungsbeispiel für ein V-förmiges Kontaktelement;
Figur 4 zeigt eine Variante des in Figur 2 gezeigten Kontaktelements mit einem abgewinkelten, insbesondere gekröpften Steg.

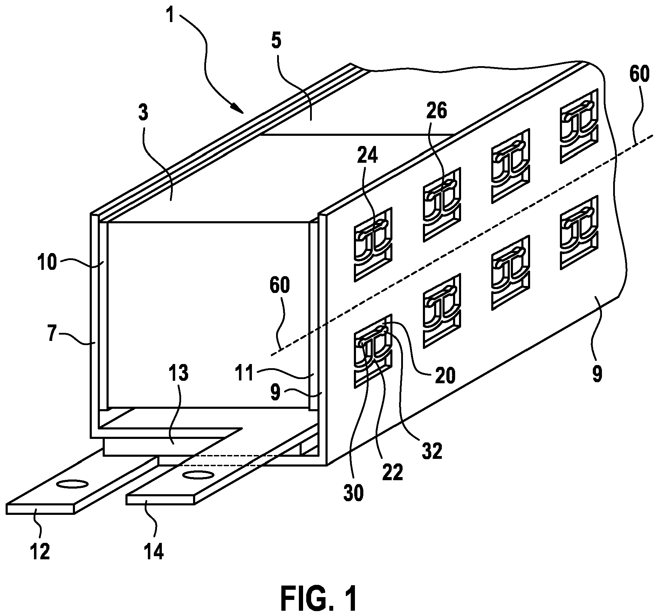

Figur 1 zeigt ein Ausführungsbeispiel für eine Speichereinheit 1. Die Speichereinheit 1 weist in diesem Ausführungsbeispiel einen Energiespeicher 3 und einen Energiespeicher 5 auf. Zusätzlich zu den Energiespeichern 3 und 5 kann die Speichereinheit 1 noch weitere Energiespeicher aufweisen. Die Energiespeicher 3 und 5 sind in diesem Ausführungsbeispiel jeweils durch einen Wickelkondensator gebildet. Die Wickelkondensatoren 3 und 5 weisen stirnseitig jeweils eine elektrisch leitfähige Schicht auf, die den elektrischen Anschluss bildet. Der Energiespeicher 3 weist einen positiven elektrischen Anschluss 10 und einen negativen elektrischen Anschluss 11 auf. Die Anschlüsse 10 und 11 sind jeweils als elektrisch leitfähige Schicht, insbesondere als Schoop-Schicht ausgebildet. Die Speichereinheit 1 weist auch eine elektrisch leitfähige Kontaktschiene 7 und eine elektrisch leitfähige Kontaktschiene 9 auf. Die Kontaktschienen 7 und 9 sind jeweils als insbesondere rechteckig abgewinkelte, sich entlang einer Längsachse 60 längs erstreckende Bleche, insbesondere Kupferbleche gebildet.

Ein abgewinkelter Bereich der positiven Kontaktschiene 7 erstreckt sich parallel zu einem entsprechenden abgewinkelten Bereich der negativen Kontaktschiene 9, wobei die sich parallel erstreckenden, abgewinkelten Bereiche durch einen elektrischen Isolator, insbesondere eine Isolierschicht 13 voneinander isoliert sind. Die abgewinkelten Bereiche der Kontaktschienen 7 und 9 schließen somit die Isolierschicht 13 nach Art eines Sandwiches zwischeneinander ein. Die abgewinkelten Bereiche bilden zusammen mit der Isolierschicht 9 einen Boden einer Art Rinne, welche durch die Kontaktschienen 7 und 9 gebildet ist. Die Energiespeicher 3 und 5 sind in diesem Ausführungsbeispiel in der so gebildeten Rinne aufgenommen. Die Speichereinheit 1, insbesondere die Kontaktschiene 9, weist einen elektrischen äußeren Anschluss 12 auf. Die Kontaktschiene 7 weist einen äußeren elektrischen Anschluss 14 auf. Die elektrischen Anschlüsse 12 und 14 sind jeweils an die entsprechenden abgewickelten Bereiche der Kontaktschienen 7 beziehungsweise 9 angeformt, welche den Boden der zuvor beschriebenen Rinne bilden.

Die Kontaktschiene 7 der Speichereinheit 1 ist mit dem Anschluss 10 des Energiespeichers 3 elektrisch leitfähig, in diesem Ausführungsbeispiel mittels Punktschweißverbindungen, verbunden. Die Punktschweißverbindungen sind am Beispiel der Kontaktschiene 9, welche mit dem Anschluss 11 des Energiespeichers 3 verbunden ist, sichtbar dargestellt. Die Kontaktschiene 9 weist dazu wenigstens eine Ausnehmung 20 auf, in welcher ein Kontaktelement 22 angeordnet ist. Die Ausnehmung 20 ist beispielsweise mittels Stanzen oder Laserschneiden erzeugt.

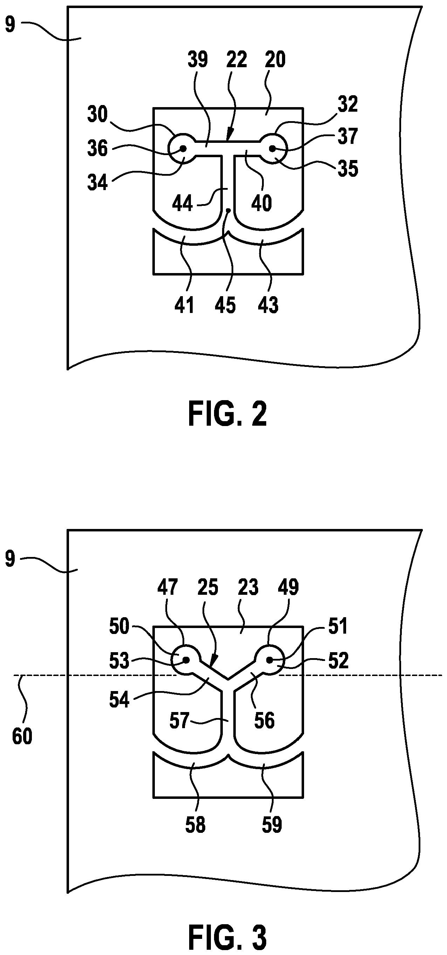

Das Kontaktelement 22 weist zwei Flügel 30 und 32 auf, welche über einen Steg und weiter über- beim Stanzen oder Laserschneiden erzeugte - U-förmige Federelemente an den umgebenden Blechbereich der Kontaktschiene 9 angeformt sind. Das Kontaktelement 22 ist im Folgenden in Figur 2 detailliert dargestellt. Die Kontaktschiene 9 weist noch weitere Kontaktelemente wie das Kontaktelement 22 auf, welche jeweils mit dem elektrischen Anschluss 11, in diesem Ausführungsbeispiel dem negativen elektrischen Anschluss des Energiespeichers 3 mittels Punktschweißverbindungen verbunden sind. Dargestellt sind ein Kontaktelement 24 und ein weiteres Kontaktelement 26. Die Kontaktelemente 24 und 26 sind jeweils mittels Stanzen oder Laserschneiden aus der Kontaktschiene 9, welche in diesem Ausführungsbeispiel durch ein Blech gebildet ist, erzeugt.

Figur 2 zeigt das in Figur 1 bereits beschriebene Kontaktelement 22 in der Aussparung 20 der Kontaktschiene 9. Das Kontaktelement 22 weist, wie bereits in Figur 1 dargestellt, zwei Flügel 30 und 32 auf. Der Flügel 30 weist einen wenigstens umfangsabschnittsweise rund, insbesondere kreisrund ausgebildeten Landebereich 34 für eine Schweißelektrode auf. Dargestellt ist auch ein Schweißpunkt 36, welcher einen kleineren Durchmesser aufweist als der Landebereich 34. Der Landebereich 34 ist an einen Verbindungsabschnitt 39 angeformt.

Der Verbindungsabschnitt 39 weist eine sich längserstreckende Form auf und geht entlang seiner Längserstreckung in einen sich ebenfalls längs erstreckenden Verbindungsabschnitt 40 über. Der Verbindungsabschnitt 40 verbindet einen Landebereich 35 des Flügels 32 mit dem Verbindungsabschnitt 39.

Zwischen den Verbindungsabschnitten 39 und 40 ist ein Steg 44 ausgebildet, welcher sich senkrecht zur Längserstreckung der Verbindungsabschnitte 39 und 40 erstreckt. Die Verbindungsabschnitte 39 und 40 schließen in diesem Ausführungsbeispiel einen Winkel von 180 Grad zwischeneinander ein. Die Verbindungsabschnitte 39 und 40 weisen somit in zueinander entgegengesetzte Richtungen.

Der Steg 44 ist mit einem von den Verbindungsabschnitten 39 und 40 abgewandten Ende mit zwei U-förmigen Federelementen, nämlich dem Federelement 41 und einem weiteren Federelement 43 verbunden. Die Federelemente 41 und 43 bilden mit der U-Form jeweils einen Mäanderabschnitt, welcher den Steg 44 mit der Kontaktschiene 9, in diesem Ausführungsbeispiel mit einer durch die Ausnehmung 20 gebildeten Umrandung der Kontaktschiene 9 verbindet.

Ein U-Schenkel des Mäanderabschnitts 43 geht in seiner Längserstreckung in den Steg 44 über, wobei ein U-Schenkel des Mäanders 41 sich in dieselbe Richtung erstreckend in den Steg 44 übergeht. Die Mäander 41 und 43 bilden in diesem Ausführungsbeispiel zusammen mit dem Steg 44 eine Doppel-U-Form, oder eine W-Form. Durch die so ausgebildete Doppel-U-Form ist ein Schwenkgelenk 45 gebildet, welches bei einer thermischen Ausdehnung des Anschlusses 11 in seiner Schichtebene - in Längsrichtung 60 in Figur 1 - die Schweißverbindungen 36 und 37 entlasten kann. Der Flügel 30, insbesondere der Landebereich 34 ist mittels des Schweißpunktes 36 mit dem in Figur 1 dargestellten Anschluss 11 verbunden. Der Flügel 32 ist mittels des Schweißpunktes 37 mit dem Anschluss 11 verbunden.

Zum Erzeugen der Schweißpunkte 36 und 37 kann beispielsweise ein Paar Schweißelektroden mit jeweils einer Elektrode auf einen der Landebereiche 34 und 35 aufsetzen. Beim anschließenden Schalten eines Schweißstromes auf die Schweißelektroden wird der Schweißpunkt 36 und der Schweißpunkt 37 erzeugt, wobei die Schweißpunkte 36 und 37 jeweils unter einer Spitze der Schweißelektroden erzeugt werden. Die Verbindungsabschnitte 39 und 40 bewirken jeweils vorteilhaft, dass ein beim Schweißen über die Verbindungsabschnitte 39 und 40 fließender Schweißstrom durch die Dimensionierung, insbesondere einen Querschnitt der Verbindungsabschnitte 39 und 40 bestimmt wird. Die Querschnittsfläche der Verbindungsabschnitte 39 und 40 weist in diesem Ausführungsbeispiel entlang einer Längserstreckung der Stege eine kleinere Querschnittsfläche auf, als die Landebereiche 34 und 35 entlang derselben Längserstreckung, ausgehend von den Verbindungsabschnitten 39 beziehungsweise 40.

Figur 3 zeigt ein Ausführungsbeispiel für ein Kontaktelement 25, welches anders ausgebildet ist als das in Figur 2 dargestellte Kontaktelement 22. Das Kontaktelement 25 weist zwei Flügel 47 und 49 auf. Der Flügel 47 weist einen Landebereich 50 und einen mit dem Landebereich 50 verbundenen, sich längs erstreckenden Verbindungsabschnitt 54 auf. Der Flügen 49 weist einen Landebereich 52 und einen mit dem Landebereich 52 verbundenen Verbindungsabschnitt 56 auf. Die Verbindungsabschnitte 54 und 56 sind mit dem jeweils von dem Landebereich abweichenden Ende miteinander verbunden und bilden zusammen eine V-Form. Ein zwischen den Verbindungsabschnitten 54 und 56 eingeschlossene Winkel beträgt in diesem Ausführungsbeispiel 90 Grad. An die miteinander verbundenen Enden der Verbindungsabschnitte 54 und 56 ist ein Steg 57 angeformt, welcher mit einer Spitze der zuvor erwähnten V-Form verbunden ist. Der Steg 57 teilt sich im weiteren Verlauf von den Flügeln 47 und 49 abweisend, in zwei Mäanderförmige, insbesondere U-förmige Federabschnitte 58 und 59.

Die Federabschnitte 58 und 59 weisen jeweils mit einer konvexen Seite von den Flügeln 47 und 49 ab. Die Federabschnitte 58 und 59 sind jeweils mit der Kontaktschiene 9 verbunden, und dort an einen die Aussparung 23 umgebenden Bereich angeformt. Die Aussparung 23 kann beispielsweise mittels Stanzen oder Laserschneiden erzeugt sein. Die Kontaktschiene 9 ist beispielsweise durch ein Blech, insbesondere ein Kupferblech gebildet.

Die V-Form der Flügel 47 und 49 bewirkt in diesem Ausführungsbeispiel vorteilhaft, dass thermische Ausdehnungen des Anschlusses 11 des Energiespeichers 3 quer zu einer Längserstreckung 60 der Speichereinheit 1 von den Federelementen 58 und 59 über den Steg 57 zusätzlich zu thermischen Ausdehnungen entlang der Längserstreckung 60 abgefangen werden können. Die Schweißverbindungen zwischen den Flügeln 47 und 49, gekennzeichnet durch einen Schweißpunkt 53 auf dem Landebereich 50 und durch einen Schweißpunkt 51 auf dem Landebereich 52, können so bei thermischen Ausdehnungen des Energiespeichers 3, insbesondere der durch den Anschluss 1 gebildeten elektrisch leitfähigen Schicht, insbesondere Schoop-Schicht, entlastet werden.

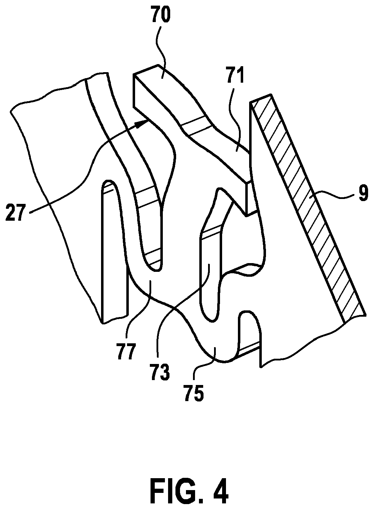

Figur 4 zeigt ein Ausführungsbeispiel für ein Kontaktelement 27, welches eine Variante des in Figur 2 bereits dargestellten Kontaktelements 22 bildet. Das Kontaktelement 27 weist - anders als das Kontaktelement 22 - keine gesonderten Landebereiche für Schweißelektroden auf. Das Kontaktelement 27 weist zwei sich entlang einer Längsvorrichtung erstreckende, und voneinander abweisende Balken 70 und 71 auf.

Die Balken 70 und 71 bilden zusammen mit einem Steg 73 eine T-Form. Der Steg 73 ist mit einem von den Balken 70 und 71 abweisenden Ende mit zwei Mäanderabschnitten, nämlich einem Mäanderabschnitt 75 und einem Mäanderabschnitt 77 verbunden. Die Mäanderabschnitte 75 und 77 bilden jeweils ein Federelement, und sind jeweils mit der Kontaktschiene 9 verbunden. Die Mäanderabschnitte 75 und 77, der Steg 73 und die Balken 70 und 71 bilden zusammen das Kontaktelement 27, welches in einer Aussparung der Kontaktschiene 9 angeordnet ist.

Die Aussparung in Figur 4 ist beispielsweise mittels Stanzen oder Laserschneiden erzeugt. Der Steg 73 des Kontaktelements 27 weist einen abgewinkelten Längsabschnitt auf, welcher bewirkt, dass die Balken 70 und 71 gekröpft aus einer durch das Blech der Kontaktschiene 9 gebildeten Ebene herausragen und sich dem Anschluss des Energiespeichers entgegenstrecken.

Bei einer Montage der in Figur 1 dargestellten Speichereinheit 1 können beispielsweise die Kontaktelemente mittels zwei zueinander parallel angeordneten Blechen - entgegen ihrer Federwirkung - zurück in die Aussparung der Kontaktschiene 9 beziehungsweise der Kontaktschiene 7 gedrückt werden. Nach einem Einfügen der Energiespeicher, beispielsweise der Energiespeicher 3 und 5, kann dann nach Herausziehen der Bleche die elektrisch leitfähige Schicht, insbesondere die Schoop-Schicht, welche den Anschluss des Energiespeichers bildet, durch die Kontaktelemente wie das Kontaktelement 27, federnd berührend elektrisch kontaktiert werden. So ist vorteilhaft auch ohne eine Schweißverbindung bereits ein galvanischer Kontakt zwischen dem Kontaktelement und dem Anschluss durch Berühren gebildet. Wenn beispielsweise durch thermische Ausdehnung des Energiespeichers eine Schweißverbindung zwischen den Flügeln des Kontaktelements und dem elektrischen Anschluss des Energiespeichers reißt, so ist ein elektrischer Kontakt zumindest noch durch die zuvor erwähnte galvanische Verbindung gegeben.

Die zuvor erwähnten Balken 70 und 71 bilden jeweils einen Flügel des Kontaktelements 27. Die Balken 70 und 71 können jeweils zum Erzeugen einer Schweißverbindung mit dem elektrischen Anschluss des Energiespeichers im Bereich eines Endes durch eine Schweißelektrode berührend kontaktiert werden.

## Patentansprüche

1. Speichereinheit (1) zum Speichern elektrischer Energie, mit wenigstens einem Energiespeicher (3, 5), welcher wenigstens einen positiven elektrischen Anschluss (10) und wenigstens einen negativen elektrischen Anschluss (11) aufweist, wobei der Energiespeicher (3, 5) ausgebildet ist, über den positiven elektrischen Anschluss (10) und den negativen elektrischen Anschluss (11) mit elektrischer Energie aufgeladen zu werden und die elektrische Energie über die Anschlüsse (10, 11) wieder abzugeben, wobei die Speichereinheit (1) eine mit dem positiven Anschluss (10) verbundene elektrisch leitfähige Kontaktschiene (7) und eine mit dem negativen Anschluss (11) verbundene elektrisch leitfähige Kontaktschiene (9) aufweist, wobei der positive Anschluss (10) und der negative Anschluss (11) des Energiespeichers (3, 5) jeweils durch eine elektrisch leitfähige Schicht gebildet ist und die Kontaktschienen jeweils als Blech ausgebildet sind,
**dadurch gekennzeichnet, dass**
die Kontaktschienen (7, 9) jeweils wenigstens ein an die Kontaktschienen federnd angeformtes Kontaktelement aufweisen, welches in einer Aussparung (20) der Kontaktschiene (9) angeordnet ist, wobei das Kontaktelement wenigstens zwei Flügel (30, 32, 47, 49, 70, 71) aufweist, welche sich mit wenigstens einer Richtungskomponente in zueinander entgegengesetzte Richtungen erstrecken und die Flügel (30, 32, 47, 49, 70, 71) jeweils mittels einer Schweißverbindung (36, 37, 51, 53), nämlich einer Punktschweißverbindung mit dem elektrischen Anschluss (10, 11) verbunden sind, wobei das Kontaktelement (22) einen Steg (44, 57, 73) aufweist, und die Flügel (30, 32, 47, 49, 70, 71) jeweils mit dem Steg (44, 57, 73) verbunden sind, wobei der Steg (44, 57, 73) mit der Kontaktschiene (9) verbunden ist.

2. Speichereinheit (1) nach Anspruch 1,
**dadurch gekennzeichnet, dass**
der Energiespeicher (3, 5) durch einen Wickelkondensator gebildet ist, welcher stirnseitig die elektrisch leitfähige Schicht aufweist, die den elektrischen Anschluss (10, 11) bildet.

3. Speichereinheit (1) nach Anspruch 1 oder 2,
**dadurch gekennzeichnet, dass**
die Flügel (30, 32, 47, 49, 70, 71) im Bereich eines Endes einen Landebereiche (34, 35, 50, 56) für eine Punktschweißelektrode und einen mit dem Landebereich (34, 35, 50, 56) verbundenen, sich längserstreckenden Verbindungsabschnitt (39, 40, 54, 56) aufweisen, wobei der Verbindungsabschnitt (39, 40, 54, 56) den Landebereich (34, 35, 50, 56) mit dem Steg (44, 57, 73) verbindet, wobei der Verbindungsabschnitt (39, 40, 54, 56) eine kleinere Querschnittsfläche quer zur Längserstreckung aufweist als der Landebereich (34, 35, 50, 56).

4. Speichereinheit (1) nach einem der vorhergehenden Ansprüche,
**dadurch gekennzeichnet, dass**
das Kontaktelement aus der Kontaktschiene mittels Stanzen oder Laserschneiden ausgeformt ist.

5. Speichereinheit (1) nach einem der vorhergehenden Ansprüche 1 bis 4,
**dadurch gekennzeichnet, dass**
die Flügel (30, 32) in zueinander entgegengesetzte Richtungen weisen, wobei wobei die Flügel (30, 32) zusammen mit dem Steg (44, 57, 73) eine T-Form ausbilden.

6. Speichereinheit (1) nach einem der vorhergehenden Ansprüche,
**dadurch gekennzeichnet, dass**
der Steg (44, 57, 73) über wenigstens eine Feder (41, 43, 58, 59, 75, 77) mit der Kontaktschiene (9) verbunden ist.

7. Speichereinheit (1) nach einem der vorhergehenden Ansprüche,
**dadurch gekennzeichnet, dass**
der Steg (44, 57, 73) über zwei Federn (41, 43, 58, 59, 75, 77) mit der Kontaktschiene (9) verbunden ist.

8. Speichereinheit (1) nach Anspruch 7,
**dadurch gekennzeichnet, dass**
die Federn jeweils durch einen Mäander (41, 43, 58, 59, 75, 77) gebildet sind, die sich jeweils mit einer konvexen Seite in eine gemeinsame Richtung erstrecken.

## Claims

1. Storage unit (1) for storing electrical energy, comprising at least one energy store (3, 5) which has at least one positive electrical connection (10) and at least one negative electrical connection (11), wherein the energy store (3, 5) is designed to be charged with electrical energy by means of the positive electrical connection (10) and the negative electrical connection (11) and to output the electrical energy again by means of the connections (10, 11), wherein the storage unit (1) has an electrically conductive contact rail (7) which is connected to the positive connection (10) and has an electrically conductive contact rail (9) which is connected to the negative connection (11), wherein the positive connection (10) and the negative connection (11) of the energy store (3, 5) are each formed by an electrically conductive layer, and the contact rails are each in the form of a metal sheet,
**characterized in that**
the contact rails (7, 9) each have at least one contact element which is integrally formed on the contact rails with a spring action and which is arranged in a cutout (20) in the contact rail (9), wherein the contact element has at least two vanes (30, 32, 47, 49, 70, 71) which by way of at least one directional component extend in opposite directions, and the vanes (30, 32, 47, 49, 70, 71) are each connected by means of a weld connection (36, 37, 51, 53), specifically a spot-weld connection, to the electrical connection (10, 11), wherein the contact element (22) has a web (44, 57, 73) and the vanes (30, 32, 47, 49, 70, 71) are each connected to the web (44, 57, 73), wherein the web (44, 57, 73) is connected to the contact rail (9).

2. Storage unit (1) according to Claim 1,
**characterized in that**
the energy store (3, 5) is formed by a winding capacitor which, at the end side, has the electrically conductive layer which forms the electrical connection (10, 11).

3. Storage unit (1) according to Claim 1 or 2,
**characterized in that**
the vanes (30, 32, 47, 49, 70, 71) have, in the region of an end, a landing region (34, 35, 50, 56) for a spot-welding electrode and an elongate connecting section (39, 40, 54, 56) which is connected to the landing region (34, 35, 50, 56), wherein the connecting section (39, 40, 54, 56) connects the landing region (34, 35, 50, 56) to the web (44, 57, 73), wherein the connecting section (39, 40, 54, 56) has a smaller cross-sectional area transverse to the longitudinal extent than the landing region (34, 35, 50, 56).

4. Storage unit (1) according to one of the preceding claims,
**characterized in that**
the contact element is formed from the contact rail by means of punching or laser cutting.

5. Storage unit (1) according to one of the preceding Claims 1 to 4,
**characterized in that**
the vanes (30, 32) point in opposite directions, wherein the vanes (30, 32), together with the web (44, 57, 73), form a T-shape.

6. Storage unit (1) according to one of the preceding claims,
**characterized in that**
the web (44, 57, 73) is connected to the contact rail (9) by means of at least one spring (41, 43, 58, 59, 75, 77).

7. Storage unit (1) according to one of the preceding claims,
**characterized in that**
the web (44, 57, 73) is connected to the contact rail (9) by means of two springs (41, 43, 58, 59, 75, 77).

8. Storage unit (1) according to Claim 7,
**characterized in that**
the springs are each formed by a meander (41, 43, 58, 59, 75, 77) which each extend, by way of a convex side, in a common direction.

## Revendications

1. Unité d'accumulation (1) destinée à accumuler de l'énergie électrique, comprenant au moins un accumulateur d'énergie (3, 5) qui possède au moins une borne électrique positive (10) et au moins une borne électrique négative (11), l'accumulateur d'énergie (3, 5) étant configuré pour être chargé avec de l'énergie électrique par le biais de la borne électrique positive (10) et de la borne électrique négative (11) et pour délivrer de nouveau l'énergie électrique par le biais des bornes (10, 11), l'unité d'accumulation (1) possédant une barre de contact électriquement conductrice (7) reliée à la borne positive (10) et une barre de contact électriquement conductrice (9) reliée à la borne négative (11), la borne positive (10) et la borne négative (11) de l'accumulateur d'énergie (3, 5) étant respectivement formées par une couche électriquement conductrice et les barres de contact étant respectivement réalisées sous la forme de plaques en tôle,
**caractérisé en ce que**
les barres de contact (7, 9) possèdent respectivement au moins un élément de contact façonné en faisant ressort sur les barres de contact, lequel est disposé dans une cavité des barres de contact (9), l'élément de contact possédant au moins deux ailettes (30, 32, 47, 49, 70, 71) qui s'étendent avec au moins une composante d'orientation dans des direction mutuellement opposées et les ailettes (30, 32, 47, 49, 70, 71) étant respectivement reliées à la borne électrique (10, 11) au moyen d'une liaison soudée (36, 37, 51, 53), à savoir une liaison soudée par point, l'élément de contact (22) possédant un élément jointif (44, 57, 73) et les ailettes (30, 32, 47, 49, 70, 71) étant respectivement reliées à l'élément jointif (44, 57, 73), l'élément jointif (44, 57, 73) étant relié à la barre de contact (9).

2. Unité d'accumulation (1) selon la revendication 1, **caractérisée en ce que** l'accumulateur d'énergie (3, 5) est formé par un condensateur enroulé qui possède, du côté frontal, une couche électriquement conductrice qui forme la borne électrique (10).

3. Unité d'accumulation (1) selon la revendication 1 ou 2, **caractérisée en ce que** les ailettes (30, 32, 47, 49, 70, 71) possèdent, dans la zone d'une extrémité, une zone d'application (34, 35, 50, 56) pour une électrode de soudage par point et une portion de liaison (39, 40, 54, 56) étendue en longueur qui est reliée à la zone d'application (34, 35, 50, 56), la portion de liaison (39, 40, 54, 56) reliant la zone d'application (34, 35, 50, 56) à l'élément jointif (44, 57, 73), la portion de liaison (39, 40, 54, 56) possédant une surface de section transversale par rapport à l'extension longitudinale plus petit que la zone d'application (34, 35, 50, 56).

4. Unité d'accumulation (1) selon l'une des revendications précédentes, **caractérisée en ce que** l'élément de contact est façonné à partir de la barre de contact par poinçonnage ou découpage au laser.

5. Unité d'accumulation (1) selon l'une des revendications précédentes 1 à 4, **caractérisée en ce que** les ailettes (30, 32) sont orientées dans des directions mutuellement opposées, les ailettes (30, 32) en association avec l'élément jointif (44, 57, 73) formant un T.

6. Unité d'accumulation (1) selon l'une des revendications précédentes, **caractérisée en ce que** l'élément jointif (44, 57, 73) est relié à la barre de contact (9) par le biais d'au moins un ressort (41, 43, 58, 59, 75, 77).

7. Unité d'accumulation (1) selon l'une des revendications précédentes, **caractérisée en ce que** l'élément jointif (44, 57, 73) est relié à la barre de contact (9) par le biais de deux ressorts (41, 43, 58, 59, 75, 77).

8. Unité d'accumulation (1) selon la revendication 7, **caractérisée en ce que** les ressorts sont respectivement formés par un méandre (41, 43, 58, 59, 75, 77) qui s'étendent respectivement dans une direction commune avec un côté convexe.
